(19) Europäisches Patentamt
European Patent Office
Office européen des brevets

(11) **EP 2 902 378 B1**

(12) **EUROPEAN PATENT SPECIFICATION**

(45) Date of publication and mention
of the grant of the patent:
**26.07.2017 Bulletin 2017/30**

(51) Int Cl.:
**C04B 35/584** *(2006.01)*     **F27D 11/02** *(2006.01)*
**H05B 3/14** *(2006.01)*

(21) Application number: **13840837.2**

(22) Date of filing: **27.09.2013**

(86) International application number:
**PCT/JP2013/076359**

(87) International publication number:
**WO 2014/051088 (03.04.2014 Gazette 2014/14)**

(54) **SILICON NITRIDE SINTERED COMPACT, HEATING DEVICE AND ADSORPTION DEVICE**

SILICIUM-NITRID-GESINTERTER PRESSLING, ERWÄRMUNGSVORRICHTUNG UND ADSORPTIONSVORRICHTUNG

COMPACT FRITTÉ DE NITRURE DE SILICIUM, DISPOSITIF DE CHAUFFAGE ET DISPOSITIF D'ADSORPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2012 JP 2012218929**

(43) Date of publication of application:
**05.08.2015 Bulletin 2015/32**

(73) Proprietor: **Kyocera Corporation**
**Kyoto-shi, Kyoto 612-8501 (JP)**

(72) Inventors:
• **OHTA, Mizuho**
**Kyoto-shi**
**Kyoto 612-8501 (JP)**

• **ISHIKAWA, Kazuhiro**
**Kyoto-shi**
**Kyoto 612-8501 (JP)**
• **ODA, Takehiro**
**Kyoto-shi**
**Kyoto 612-8501 (JP)**

(74) Representative: **Viering, Jentschura & Partner mbB**
**Patent- und Rechtsanwälte**
**Am Brauhaus 8**
**01099 Dresden (DE)**

(56) References cited:
**WO-A1-2005/019133    WO-A1-2011/111746**
**CN-A- 101 100 388    JP-A- 2009 206 455**
**JP-A- 2012 106 920**

EP 2 902 378 B1

**Description**

Technical Field

The present invention relates to a silicon nitride sintered compact, a heating device and an adsorption device.

Background Art

Since a silicon nitride sintered compact has high thermal conductivity and is good in heat shock resistance and abrasion resistance, the silicon nitride sintered compact is used as various members, for example, a member for molten metal (such as a protective tube for heater, a ladle, a stalk, or a rotor for degassing) which is dipped in a molten metal of aluminum, zinc, copper, magnesium or an alloy of such metals, or an adsorption member which is used in an adsorption device for fixing a semiconductor wafer.

As a silicon nitride sintered compact, for example, PTL 1 proposes a silicon nitride sintered compact of which a grain boundary phase includes $YbMgSi_2O_5N$ crystal, and a peak intensity ($I_{Yb}$) indicating a maximum intensity among peaks based on $YbMgSi_2O_5N$ in an X-ray diffraction chart is more than 0% and 10% or less with respect to a peak intensity (Is) indicating a maximum intensity among peaks based on silicon nitride.

Moreover, in CN 101 100 388 and in PTL 2, it is proposed a silicon nitride sintered compact including a $MgY_4Si_3O_{13}$ crystal. Citation List

Patent Literature

PTL 1: International Publication No. WO 2008/114752 PTL 2: Japanese Patent No. 28552682

JP 2012 106920 discloses a method for manufacturing a silicon nitride sintered compact with excellent mechanical and thermal shock resistance useful as protective tube for heating devices.

WO 2011/111746 discloses a silicon nitride sintered compact comprising silicon nitride crystals and REMgSi2O5N crystals

Summary of Invention

Technical Problem

However, in recent years, it is desired that silicon nitride sintered compacts to be used as various members have higher thermal conductivity.

The present invention is devised to satisfy the demand described above, and an object thereof is to provide a silicon nitride sintered compact of which thermal conductivity is high, a heating device and an adsorption device using the silicon nitride sintered compact.

Solution to Problem

A silicon nitride sintered compact according to the present invention includes a silicon nitride crystal, an $MgRE_4Si_3O_{13}$ crystal (RE is a rare earth element), and an $REMgSi_2O_5N$ crystal.

A heating device according to the present invention includes a heater, and a protective tube in which the heater is placed and protected. The protective tube is made up of the silicon nitride sintered compact of the configuration described above.

An adsorption device according to the present invention includes an adsorption member that includes an adsorption hole, and a support member that supports the adsorption member. The adsorption member is made up of the silicon nitride sintered compact of the configuration described above.

Advantageous Effects of Invention

According to the silicon nitride sintered compact of the present invention, the silicon nitride crystal, the $MgRE_4Si_3O_{13}$ crystal (RE is the rare earth element), and the $REMgSi_2O_5N$ crystal are included, and thus, the silicon nitride sintered compact of which thermal conductivity is high, is made.

According to the heating device of the present invention, the heater, and the protective tube in which the heater is placed and protected, are included, and the protective tube is made up of the silicon nitride sintered compact of the configuration described above, and thus, it is possible to efficiently transmit heat of the heater to an outside of the protective tube.

According to the adsorption device of the present invention, the adsorption member that includes the adsorption hole, and the support member that supports the adsorption member, are included, and the adsorption member is made up of the silicon nitride sintered compact of the configuration described above, and thus, it is possible to efficiently dissipate heat of an adsorbed body.

Brief Description of Drawings

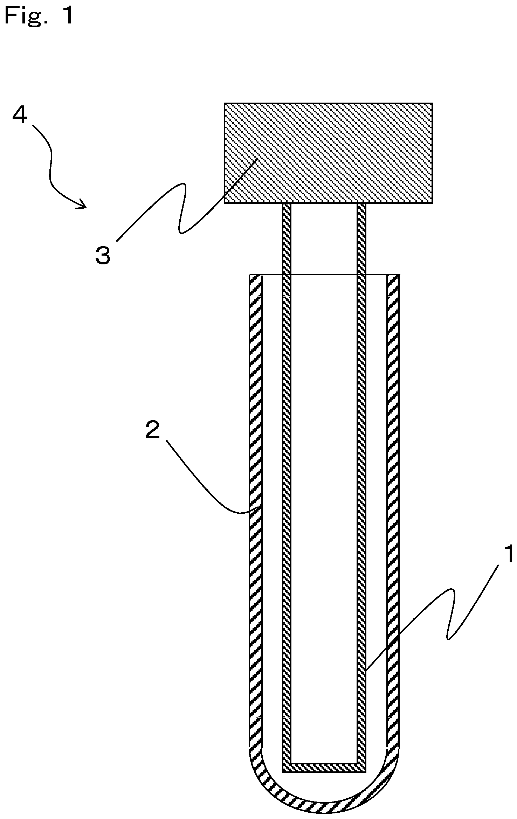

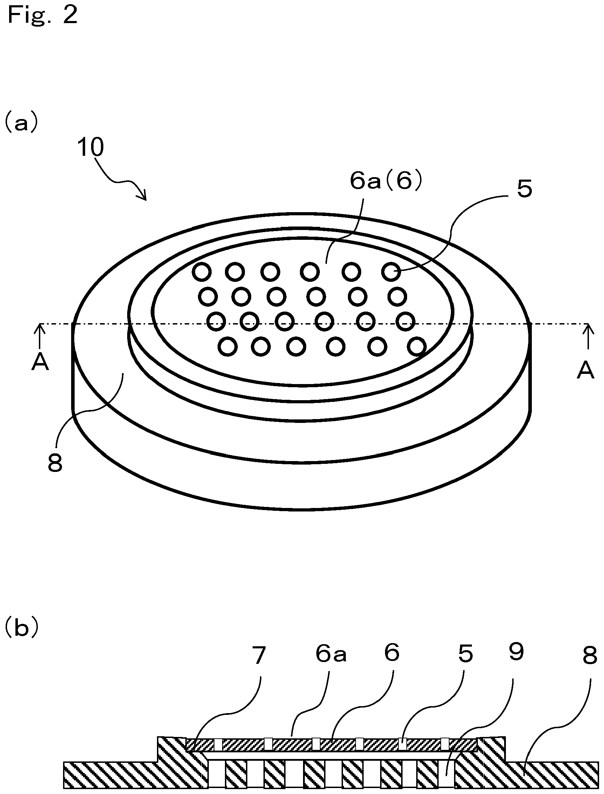

Fig. 1 is a cross-sectional view schematically illustrating an example of a heating device according to an embodiment. Fig. 2 illustrates an example of an adsorption device according to the embodiment, where (a) is a perspective view, and (b) is a cross-sectional view cut along a line A-A in (a).

Description of Embodiments

Hereinafter, a silicon nitride sintered compact of an embodiment will be described in detail.

The silicon nitride sintered compact of the embodiment includes a silicon nitride crystal, an $MgRE_4Si_3O_{13}$ crystal, and an $REMgSi_2O_5N$ crystal. Here, RE is a rare earth element, and there are scandium (SC), yttrium (Y), and a lanthanoid element (La, Ce, Pr, Nd, Pm, Sm, Eu, Gd, Tb, Dy, Ho, Er, Tm, Yb, or Lu). In the silicon nitride sintered compact of the embodiment, the silicon nitride crystal is present as a main phase, and between the silicon nitride crystals, at least the $MgRE_4Si_3O_{13}$ crystal, the $REMgSi_2O_5N$ crystal, and an amorphous phase are present as a grain boundary phase.

The silicon nitride sintered compact satisfies the configuration described above, and thereby, since a ratio of the amorphous phase of which thermal conductivity is low becomes relatively small in the grain boundary phase, the silicon nitride sintered compact has a high thermal conductivity. Furthermore, the reason why the silicon nitride sintered compact of the embodiment has the high thermal conductivity is not clear, but it is assumed that the $MgRE_4Si_3O_{13}$ crystal and the $REMgSi_2O_5N$ crystal are present in the grain boundary phase, and thereby, the crystallization is promoted in comparison with a case in which the $MgRE_4Si_3O_{13}$ crystal or the $REMgSi_2O_5N$ crystal alone is present.

Moreover, it is preferable that the silicon nitride sintered compact of the embodiment contains the silicon nitride of 80 mass% or more, and a ratio ($I_1/I_0$ x 100) of a peak intensity $I_1$ of the $MgRE_4Si_3O_{13}$ crystal at a diffraction angle of 31° to 34°, to a peak intensity $I_0$ of the silicon nitride crystal at a diffraction angle of 27° to 28° which is calculated by an X-ray diffraction method, is 2% or more and 9% or less. When such the configuration is satisfied, it is possible to make the silicon nitride sintered compact having the high thermal conductivity and high mechanical properties. Furthermore, when the ratio ($I_1/I_0$ x 100) is 4% or more and 8% or less, it is possible to make the silicon nitride sintered compact having further high mechanical properties.

A silicon nitride content can be calculated by an X-ray diffraction device (XRD). Specifically, the silicon nitride sintered compact is measured by the XRD, and a Rietveld analysis of the obtained result is performed, and thereby, the content can be calculated. Moreover, identifications of the silicon nitride crystal, the $MgRE_4Si_3O_{13}$ crystal, and the $REMgSi_2O_5N$ crystal can be confirmed using the XRD or a transmission electron microscope (TEM). Note that there is no problem even if inevitable impurities are included in the silicon nitride sintered compact of the embodiment.

Further, in the silicon nitride sintered compact of the embodiment, it is preferable that in a surface layer, first compounds including iron and silicon are dotted, and the number of the first compounds of which equivalent circle diameters are 0.05 $\mu$m or more and 5 $\mu$m or less, is $2.0 \times 10^4$ or more and $2.0 \times 10^5$ or less per 1 $mm^2$. Here, the surface layer of the embodiment indicates a portion from a surface of the silicon nitride sintered compact to a depth of 1 mm. When such configuration is satisfied, the first compounds including iron and silicon are thermodynamically stable, and thus, heat shock resistance of the silicon nitride sintered compact can be improved, and even if the first compounds are oxidized and discolored, the discoloration of the silicon nitride sintered compact can be suppressed.

Here, as a first compound including iron and silicon, a compound (for example, $FeSi_3$, $FeSi_2$, or the like) which is made up of iron and silicon, or a compound which is made up of iron, silicon, and at least one element of oxygen, aluminum, magnesium, calcium, sodium, and potassium, may be used.

Moreover, in the silicon nitride sintered compact of the embodiment, it is preferable that in the surface layer, second compounds including tungsten and silicon are dotted, and the number of the second compounds of which equivalent circle diameters are 0.05 $\mu$m or more and 5 $\mu$m or less, is $2.0 \times 10^4$ or more and $2.0 \times 10^5$ or less per 1 $mm^2$. When such configuration is satisfied, since a tendency of blackening of the surface of the silicon nitride sintered compact becomes strong, color unevenness is unlikely to occur on the surface. Furthermore, in the first compounds including tungsten and silicon, the mechanical properties such as strength are enhanced, and thus, crack occurrence can be suppressed even when mechanical stress is given.

Here, a second compound including tungsten and silicon is a compound (for example, $W_5Si_3$, $W_3Si_2$, or the

like) which is made up of tungsten and silicon, or a compound which is made up of tungsten, silicon, and at least one element of oxygen, aluminum, magnesium, calcium, sodium, and potassium, may be used.

Moreover, it is possible to confirm whether or not the first compounds including iron and silicon, and the second compounds including tungsten and silicon are dotted in the surface layer, as follows. That is, using EPMA, mapping is confirmed and it is possible to confirm whether or not locations where a position of Fe and a position of Si are overlapped are present, and locations where a position of W and the position of Si are overlapped are present. Each compound is measured by the XRD, and may be identified.

Further, the number per 1 $mm^2$ of the first compounds including iron and silicon of which the equivalent circle diameters are 0.05 $\mu$m or more and 5 $\mu$m or less, and the number per 1 $mm^2$ of the second compounds including tungsten and silicon of which the equivalent circle diameters are 0.05 $\mu$m or more and 5 $\mu$m or less, may be calculated as follows. Using a scanning electron microscope (SEM) with a magnification of 1000 times, for example, the range is set such that an area is 10.8 x $10^4$ $\mu m^2$ (a length in a lateral direction is 127 $\mu$m, and a length in a longitudinal direction is 85.3 $\mu$m), a reflected electron image of the range is captured by a CCD camera, and using an image analysis soft "Azokun" (registered trademark, manufactured by Asahi Kasei Engineering Corp.), the analysis may be performed by a method such as a particle analysis.

Here, as a setting condition of the method, lightness may be set to be bright, a binarization method may be set to be manual, and a threshold which is an index indicating light and shade of the reflected electron image may be set to be, for example, 1.5 times to 1.8 times of a peak value of histogram indicating brightness at each point (each pixel) within the reflected electron image. Moreover, when both of the first compounds including iron and silicon and the second compounds including tungsten and silicon are present, the threshold may be set appropriately to a value with which each of the compounds is identifiable by a color tone. An optical microscope may be used instead of the scanning electron microscope.

Further, for example, the silicon nitride sintered compact of the embodiment may be a dense body, or a porous body of which porosity is 20 volume% or more and 60 volume% or less, in accordance with a use purpose.

In the case where the silicon nitride sintered compact of the embodiment is the porous body, it is preferable that a ratio (referred to as the ratio (p75/p25), hereinafter) of a pore diameter (p75) of cumulation 75 volume% to a pore diameter (p25) of cumulation 25 volume%, is 1.1 or more and 1.5 or less in a pore diameter cumulative distribution curve.

When the ratio (p75/p25) is 1.1 or more and 1.5 or less, since variations of the pore diameter become small, and the heat shock resistance and the mechanical properties can be increased, the crack occurrence can be suppressed even if the silicon nitride sintered compact is used for the use purpose where heating and cooling are repeatedly performed.

The pore diameter (p25) and the pore diameter (p75) of the silicon nitride sintered compact are pore diameters corresponding to cumulation 25 volume% and 75 volume% in the pore diameter cumulative distribution curve of the silicon nitride sintered compact. Moreover, the pore diameter cumulative distribution curve is a curve indicating the cumulative distribution of the pore diameter, and a curve indicating a distribution range of the pore diameter, in the case where a horizontal axis represents the pore diameter, and a vertical axis represents a percentage of a cumulative pore volume of the pore diameter in a two-dimensional graph.

Here, the pore diameter of the silicon nitride sintered compact may be calculated in accordance with a mercury intrusion method. Specifically, first, a sample is cut from the silicon nitride sintered compact so that mass of the sample is 2 g or more and 3 g or less. Next, using a mercury intrusion porosimeter, mercury is inject into the pore of the sample, and the pressure which is applied to mercury, and the volume of mercury in the pore, are measured.

The volume of mercury is equal to the volume of the pore, and the relationship between the pressure applied to mercury and the pore diameter is represented by the following expression (1) (relational expression of Washburn).

$$p = -4\sigma\cos\theta/P \qquad ...(1)$$

where, p: pore diameter (m)
P: pressure which is applied to mercury (Pa)
$\sigma$: surface tension of mercury (0.485 N/m)
$\theta$: contact angle of mercury and a pore surface (130°)

Each pore diameter p with respect to each pressure P is calculated from the expression (1), the cumulative distribution curve is made from the distribution of each pore diameter p and the cumulative pore volume, and the pore diameters of which the percentages of the cumulative pore volume correspond to 25 volume% and 75 volume%, are the pore diameter (p25) and the pore diameter (p75).

As described above, the silicon nitride sintered compact of the embodiment may be preferably used, for example, for a member for molten metal such as a protective tube for heater which is dipped in a molten metal, or used for a member for molten metal in which the molten metal flows, or may be used for an adsorption member or the like which is used in an adsorption device for fixing a semiconductor wafer. Hereinafter, those will be described using the drawings.

Fig. 1 is a cross-sectional view schematically illustrating an example of a heating device according to the embodiment.

A heating device 4 illustrated in Fig. 1, includes a heater 1, a protective tube 2 in which the heater 1 is placed and protected, and a power supply 3 for supplying electric power to the heater 1. The protective tube 2 is made up of the silicon nitride sintered compact of the embodiment. Hereinafter, for example, a case of being used in the molten metal of aluminum, zinc, copper, magnesium, or an alloy of such metals, will be described.

The protective tube 2, in which the heater 1 is placed, is dipped in the molten metal (not illustrated) and is used, and the heat of the heater 1 emitting the heat to which the electric power is supplied from the power supply 3, is transmitted to the molten metal through the protective tube 2 which is made up of the silicon nitride sintered compact of the embodiment, and thereby, it is possible to efficiently transmit the heat of the heater 1 to the molten metal, and it is possible to maintain a molten state of the molten metal.

In addition to being used for the molten metal, for example, the heating device 4 of the embodiment can be used for reheating a thermal spring.

Fig. 2 illustrates an example of an adsorption device according to the embodiment, where (a) is a perspective view, and (b) is a cross-sectional view cut along a line A-A in (a).

An adsorption device 10 of the embodiment includes a plate-shaped adsorption member 6 that includes adsorption holes 5, and a support member 8 that includes a step difference 7 for mounting the adsorption member 6 at a center thereof. The adsorption member 6 is made up of the silicon nitride sintered compact of the embodiment. The support member 8 includes through holes 9 for communicating with the outside, and the through holes 9 are connected to a vacuum pump (not illustrated) through a piping (not illustrated). For example, the support member 8 may be made up of ceramic or metal, and the adsorption member 6 and the support member 8 are sealed using an adhesive (not illustrated), so that a gap is not present.

Here, in Fig. 2, as adsorption holes 5 of an adsorption member 6, an example of the through holes going through from an adsorption face 6a toward an opposite face is illustrated, but the adsorption member 6 may be a porous body, and pores of the porous body may be used as adsorption holes.

Since the adsorption member 6 is made up of the silicon nitride sintered compact of the embodiment, the adsorption device 10 of the embodiment can efficiently dissipate heat of an adsorbed body. Hence, it is possible to enhance reliability of the adsorption device 10.

Next, a method of manufacturing the silicon nitride sintered compact of the embodiment will be described. First, a metal silicon powder and a silicon nitride powder are prepared, and a mixed powder is prepared in which a mass ratio of the metal silicon powder to the silicon nitride powder is 1 to 10. Here, there is a concern that nitriding and sintering may be insufficient depending on a size of a grain diameter of the metal silicon powder, and thus, the metal silicon powder having a grain diameter ($D_{90}$) of 10 $\mu$m or less, preferably 6 $\mu$m or less is used. The grain diameter ($D_{90}$) is a grain diameter of which cumulative volume is 90% when a sum total of the cumulative volume of a grain size distribution curve is 100%.

In order to form the grain boundary phase, a powder of oxide of the rare earth element, and a powder of a magnesium compound that is at least one of magnesium hydroxide, magnesium oxide and magnesium carbonate are prepared.

Here, among total 100 mass% of the mixed powder, the powder of the oxide of the rare earth element, and the powder of the magnesium compound (hereinafter, the mixed powder, the powder of the oxide of the rare earth element, and the powder of the magnesium compound are simply referred to as a starting material), it is preferable that the powder of the oxide of the rare earth element is 10 mass% or more and 14 mass% or less, and the powder of the magnesium compound is 2 mass% or more and 4 mass% or less.

Moreover, at least one type of powder of iron oxide, chromium oxide, nickel oxide, molybdenum oxide, and tungsten oxide may be added to total 100 mass parts of the starting materials, so as to be 0.02 mass parts or more and 4 mass parts or less. Such iron oxide, chromium oxide, nickel oxide, molybdenum oxide, and tungsten oxide are generated as silicide which is thermodynamically stable, by reacting with silicon and dropping out oxygen at the time of firing, and the silicide is present within the grain boundary phase, and thereby, it is possible to enhance the mechanical properties and the heat shock resistance at a high temperature.

Here, in order to obtain the silicon nitride sintered compact where in the surface layer, the first compounds including iron and silicon are dotted, and the number of the first compounds of which the equivalent circle diameters are 0.05 $\mu$m or more and 5 $\mu$m or less, is $2.0 \times 10^4$ or more and $2.0 \times 10^5$ or less per 1 mm$^2$, the iron oxide powder of which a specific surface area is 0.5 m$^2$/g or more and 50 m$^2$/g or less, may be prepared. Furthermore, an amount of the prepared iron oxide powder is made so that the iron oxide powder is 1 mass part or more and 1.7 mass parts or less with respect to total 100 mass parts of the starting materials.

Moreover, in order to obtain the silicon nitride sintered compact where in a surface layer, the second compounds including tungsten and silicon are dotted, and the number of the second compounds of which the equivalent circle diameters are 0.05 $\mu$m or more and 5 $\mu$m or less, is 2.0 x $10^4$ or more and 2.0 x $10^5$ or less per 1 mm$^2$, a tungsten oxide powder of which the specific surface area is 0.5 m$^2$/g or more and 50 m$^2$/g or less, may be prepared. Furthermore, an amount of the prepared tungsten oxide powder is made so that the tungsten oxide powder is 0.6 mass part or more and 0.9 mass part or less with respect to total 100 mass parts of the starting materials.

Next, each powder which is weighed by a predetermined amount, with a solvent, are mixed and ground by a barrel mill, tumbling mill, vibration mill, or bead mill of a wet type, and slurry is made. Further, by mixing an organic binder such paraffin wax, PVA (polyvinyl alcohol), or PEG (poly ethylene glycol) to the slurry so as to be 1 mass part or more and 10 mass parts or less with respect to total 100 mass parts of the starting materials, it is possible to enhance moldability. Furthermore, a dispersing agent may be added in order to enhance dispersibility.

When the silicon nitride sintered compact of the embodiment is the porous body, a pore forming agent which is made up of resin beads may be mixed to the slurry. In order to obtain the porous body of which the porosity is 20 volume% or more and 60 volume% or less, using the pore forming agent of which an average grain diameter is 0.015 $\mu$m or more and 0.14 $\mu$m or less, an addition amount of the pore forming agent may be 2 mass parts or more and 6 mass parts or less with respect to total 100 mass parts of the starting materials.

For example, as a pore forming agent, a silicone bead, or a non-crosslinking resin bead of suspension polymerization which is made up of at least one type of polystyrene and poly acryl-styrene, may be used. Here, in order to obtain the silicon nitride sintered compact of which the ratio ($p_{75}/p_{25}$) is 1.1 or more and 1.5 or less, the resin bead of which a ratio ($d_{75}/d_{25}$) of a pore diameter ($d_{75}$) of cumulation 75 volume% to a pore diameter ($d_{25}$) of cumulation 25 volume%, is 1.05 or more and 1.45 or less in the pore diameter cumulative distribution curve, may be used.

Next, after passing the slurry which is ground till the diameter ($D_{90}$) becomes 3 $\mu$m or less through a sieve, granules are obtained using a spray drying device.

Next, the obtained granules are made into a molded compact having a desired shape, by press molding, CIP (Cold Isostatic Pressing) molding or the like. If molding stress is in a range of 50 MPa to 100 MPa, it is suitable from the viewpoint of density improvement of the molded compact, and collapse properties of the granules.

Moreover, a molding method such as casting molding, injection molding, tape molding, or extrusion molding may be used. Still more, after molding by such molding method, the molded compact may be made into a desired shape by being cut, being stacked, or being bonded.

Next, the obtained molded compact is mounted within a degreasing furnace, and is degreased in nitrogen or vacuum atmosphere, and thereby, a degreased compact is obtained. A degreasing temperature is different depending on the type of the added organic binder, but it is preferably 900°C or less. In particular, it is more preferably 500°C to 800°C.

Subsequently, the degreased compact is mounted in a nitriding treatment furnace, and is nitrided in the nitrogen atmosphere while the temperature is further raised from the degreasing temperature. The nitriding proceeds as follows. In the degreased compact including metal silicon, the nitriding starts from the metal silicon which is present in a surface of the degreased compact in a nitriding process, and the nitriding of the metal silicon which is present on the more inside of the degreased compact, proceeds with lapse of the time. Hence, particularly in order to avoid insufficient nitriding in the degreased compact, it is preferable that the nitriding (second nitriding process) at a high temperature is performed, after the nitriding (first nitriding process) at a low temperature is performed.

First, in the first nitriding process, by setting the pressure of the nitrogen to be 10 kPa to 200 kPa, and by being retained for 15 hours to 25 hours at the temperature of 1000°C to 1200°C, 10 mass% to 70 mass% of the metal silicon in the degreased compact is nitrided. Next, in the second nitriding process, by being retained for 5 hours to 15 hours at the temperature between the temperature of the first nitriding process and 1400°C, the remaining portion of the metal silicon in the degreased compact is nitrided, and a nitrided compact is obtained. Here, the temperature of the second nitriding process is higher than the temperature of the first nitriding process, and a case of successively performing the first nitriding process and the second nitriding process is economical, and thus, it is preferable that the first nitriding process and the second nitriding process are successively performed.

The nitrided compact is placed in a sagger which is arranged within a firing furnace, the pressure of the nitrogen is maintained to be 400 Pa to 800 Pa, the temperature is increased, and the nitrided compact is retained for 8 hours to 12 hours at the temperature which is 1760°C or higher and 1860°C or lower. Thereafter, the temperature drop is performed such that a temperature drop rate is 120°C/hour or higher and 195°C/hour or lower. In this manner, by making the temperature drop rate be in the above range while performing the nitriding reaction sintering, the silicon nitride sintered compact of the embodiment can be obtained.

Moreover, in order to obtain the silicon nitride sintered compact of which the ratio ($I_1/I_0$ x 100) is 2% or more and 9% or less, after being retained for 8 hours to 12 hours at the above temperature, the temperature drop may be performed such that the temperature drop rate is 120°C/hour or higher and 190°C/hour or lower. Furthermore, in order to make the ratio ($I_1/I_0$ x 100) which is 4% or more and 8% or less, after being retained for 8 hours to 12 hours at the above temperature, the temperature drop may be performed such that the temperature drop rate is 145°C/hour or higher and 175°C/hour or lower.

Additionally, when the nitrided compact is placed in the sagger, in order to control the atmosphere of the inside, it is preferable that a degreased compact which is made up of metal silicon and silicon dioxide, is also placed in the sagger. In the degreased compact, a mole ratio of the metal silicon and the silicon dioxide is Si : $SiO_2$ = 0.6 to 1.4 : 1.

Furthermore, in a case of obtaining the silicon nitride sintered compact of which relative density is 99 mass% or more, a hot isostatic processing (HIP) treatment may be performed, and thus the thermal conductivity and the mechanical properties can be further increased by performing the treatment.

Hereinafter, Examples of the embodiments will be specifically described, but the embodiments are not limited to Examples.

EXAMPLE 1

First, the metal silicon powder of which the average grain diameter is 3 $\mu$m, and the silicon nitride powder of which the average grain diameter is 1 $\mu$m, are prepared, and the mixed powder of which the mass ratio of the metal silicon powder to the silicon nitride powder is 5.5, is obtained. Moreover, in order to form the grain boundary phase, the powder of the oxides of the rare earth elements illustrated in Table 1, and the powder of magnesium hydroxide are prepared.

Here, among total 100 mass% of the starting materials, the powder of the oxides of the rare earth elements illustrated in Table 1, and the powder of magnesium hydroxide are weighed and prepared per each sample, so as to be 12 mass parts and 3 mass parts, respectively.

Subsequently, the weighed respective powders, ethanol, and the media for grinding which is made up of the silicon nitride sintered compact, are put into the barrel mill, and are mixed and ground in the wet type. Thereafter, with respect to total 100 mass parts of the starting materials, by adding and mixing polyvinyl alcohol (PVA) which is the organic binder as 5 mass parts, the slurry is obtained. Next, after the granules are obtained using the spray drying device, the CIP molding is performed using the obtained granules, and furthermore, a cutting process is performed, and the molded compact of the protective tube 2 of which an outer diameter, an inner diameter, and the length are respectively 180 mm, 157 mm and 1205 mm, is obtained.

Next, the molded compact is mounted in the degreasing furnace, and is degreased by being retained for 5 hours at 500°C in the nitrogen atmosphere. Next, the degreased compact is mounted in the nitriding treatment furnace, and is nitrided by setting the pressure of the nitrogen to be 150 kPa, and raising the temperature, and being retained for 20 hours at 1050°C and for 10 hours at 1250°C, and the nitrided compact is molded. Subsequently, the nitrided compact is placed in the sagger which is arranged in the firing furnace, and in order to control the atmosphere of the inside, the degreased compact which is made up of the metal silicon and the silicon dioxide, is also placed in the sagger. The mole ratio of the metal silicon and the silicon dioxide configuring the degreased compact, is 1 : 1. By setting the pressure of the nitrogen to be 600 Pa, and raising the temperature, and being retained for 10 hours at 1830°C, and dropping the temperature at the temperature drop rate illustrated in Table 1, Samples No. 1 to 9, 11 to 19, and 21 to 29 having the shape of the protective tube 2 illustrated in Fig. 1, of which the outer diameter, the inner diameter, and the length are respectively 150 mm, 130 mm, and 1000 mm, are obtained.

Moreover, Sample No. 10 is obtained by the same manufacturing method as Samples No. 1 to 9, except that liquid phase sintering is performed without the nitriding process using the silicon nitride powder as a base powder. Similarly, Sample No. 20 is obtained by the same manufacturing method as Samples No. 11 to 19, except that the liquid phase sintering is performed without the nitriding process using the silicon nitride powder as a base powder, and Sample No. 30 is obtained by the same manufacturing method as Samples No. 21 to 29, except that the liquid phase sintering is performed without the nitriding process using the silicon nitride powder as a base powder. Firing conditions of the liquid phase sintering of Samples No. 10, 20 and 30 are as follows. The obtained molded compact is put into the sagger, and is retained for 15 hours at 1850°C in the nitrogen gas pressure of 10 atmospheric pressure, and the temperature is dropped at the temperature drop rate illustrated in Table 1.

Additionally, as Samples No. 31, 32 and 33, the samples where the HIP treatment is performed on the sintered compact which is obtained by the same manufacturing method as Samples No. 4, 14 and 24, are manufactured. Furthermore, the HIP treatment is performed as follows. In the nitrogen atmosphere, the temperature and the pressure are respectively 1700°C and 100 MPa, and the heating and the treatment are performed for 1 hour.

The crystal which is included in the grain boundary phase, is identified by the XRD, and a composition formula of the identified crystal is illustrated in Table 1. By the measurement of the XRD, it is confirmed that all samples have the silicon nitride crystals. The ratio ($I_1/I_0$ x 100) of the peak intensity $I_1$ of the $MgRE_4Si_3O_{13}$ crystal at the diffraction angle of 31° to 34°, to the peak intensity $I_0$ of the silicon nitride crystal at the diffraction angle of 27° to 28°, and a ratio ($I_2/I_0$ x 100) of a peak intensity $I_2$ of the $REMgSi_2O_5N$ crystal at the diffraction angle of 29° to 32° to the peak intensity $I_0$, are calculated, and are respectively illustrated by A and B in Table 1.

Moreover, a test specimen is cut from each sample in conformity to JIS R 1611-1997, and the thermal conductivity is measured. Furthermore, 10 test specimens are cut from each sample in conformity to JIS R 1601-2008, and four-point bending strength is measured at a room temperature, and an average of the measured values is illustrated in Table 1.

The silicon nitride contents of Samples No. 1 to 33 are calculated by the XRD, and as a result, it is confirmed that all of the contents are 80 mass% or more.

[Table 1]

| Sample No. | Oxide of rare earth element | Temperature drop rate (°C/hour) | Composition formula | A* (%) | Composition formula | B* (%) | Thermal conductivity (W/(m·K)) | Four-point bending strength (MPa) |
|---|---|---|---|---|---|---|---|---|
| 1 | $Y_2O_3$ | 100 | $MgY_4Si_3O_{13}$ | 1 | - | - | 46 | 640 |
| 2 | $Y_2O_3$ | 120 | $MgY_4Si_3O_{13}$ | 2 | $YMgSi_2O_5N$ | 1 | 49 | 650 |
| 3 | $Y_2O_3$ | 130 | $MgY_4Si_3O_{13}$ | 3 | $YMgSi_2O_5N$ | 2 | 54 | 680 |
| 4 | $Y_2O_3$ | 145 | $MgY_4Si_3O_{13}$ | 4 | $YMgSi_2O_5N$ | 3 | 56 | 690 |
| 5 | $Y_2O_3$ | 160 | $MgY_4Si_3O_{13}$ | 6 | $YMgSi_2O_5N$ | 7 | 57 | 690 |
| 6 | $Y_2O_3$ | 175 | $MgY_4Si_3O_{13}$ | 8 | $YMgSi_2O_5N$ | 9 | 58 | 690 |
| 7 | $Y_2O_3$ | 190 | $MgY_4Si_3O_{13}$ | 9 | $YMgSi_2O_5N$ | 10 | 59 | 670 |
| 8 | $Y_2O_3$ | 195 | $MgY_4Si_3O_{13}$ | 10 | $YMgSi_2O_5N$ | 13 | 61 | 645 |
| 9 | $Y_2O_3$ | 200 | - | - | - | - | 44 | 636 |
| 10 | $Y_2O_3$ | 70 | - | - | $YMgSi_2O_5N$ | 2 | 45 | 638 |
| 11 | $Yb_2O_3$ | 100 | $MgYb_4Si_3O_{13}$ | 1 | - | - | 47 | 630 |
| 12 | $Yb_2O_3$ | 120 | $MgYb_4Si_3O_{13}$ | 2 | $YbMgSi_2O_5N$ | 1 | 50 | 640 |
| 13 | $Y_2O_3$ | 130 | $MgYb_4Si_3O_{13}$ | 3 | $YbMgSi_2O_5N$ | 2 | 55 | 670 |
| 14 | $Y_2O_3$ | 145 | $MgYb_4Si_3O_{13}$ | 4 | $YbMgSi_2O_5N$ | 3 | 57 | 680 |
| 15 | $Y_2O_3$ | 160 | $MgYb_4Si_3O_{13}$ | 6 | $YbMgSi_2O_5N$ | 7 | 58 | 680 |
| 16 | $Y_2O_3$ | 175 | $MgYb_4Si_3O_{13}$ | 8 | $YbMgSi_2O_5N$ | 9 | 59 | 680 |
| 17 | $Y_2O_3$ | 190 | $MgYb_4Si_3O_{13}$ | 9 | $YbMgSi_2O_5N$ | 10 | 60 | 660 |
| 18 | $Y_2O_3$ | 195 | $MgYb_4Si_3O_{13}$ | 10 | $YbMgSi_2O_5N$ | 13 | 62 | 636 |
| 19 | $Y_2O_3$ | 200 | - | - | - | - | 45 | 636 |
| 20 | $Y_2O_3$ | 70 | - | - | $YbMgSi_2O_5N$ | 2 | 46 | 638 |
| 21 | $Er_2O_3$ | 100 | $MgEr_4Si_3O_{13}$ | 1 | - | - | 47 | 630 |
| 22 | $Er_2O_3$ | 120 | $MgEr_4Si_3O_{13}$ | 2 | $ErMgSi_2O_5N$ | 1 | 50 | 640 |
| 23 | $Er_2O_3$ | 130 | $MgEr_4Si_3O_{13}$ | 3 | $ErMgSi_2O_5N$ | 2 | 55 | 670 |
| 24 | $Er_2O_3$ | 145 | $MgEr_4Si_3O_{13}$ | 4 | $ErMgSi_2O_5N$ | 3 | 57 | 680 |
| 25 | $Er_2O_3$ | 160 | $MgEr_4Si_3O_{13}$ | 6 | $ErMgSi_2O_5N$ | 7 | 58 | 680 |

(continued)

| Sample No. | Oxide of rare earth element | Temperature drop rate (°C/hour) | Composition formula | A* (%) | Composition formula | B* (%) | Thermal conductivity (W/(m·K)) | Four-point bending strength (MPa) |
|---|---|---|---|---|---|---|---|---|
| 26 | $Er_2O_3$ | 175 | $MgEr_4Si_3O_{13}$ | 8 | $ErMgSi_2O_5N$ | 9 | 59 | 680 |
| 27 | $Er_2O_3$ | 190 | $MgEr_4Si_3O_{13}$ | 9 | $ErMgSi_2O_5N$ | 10 | 60 | 660 |
| 28 | $Er_2O_3$ | 195 | $MgEr_4Si_3O_{13}$ | 10 | $ErMgSi_2O_5N$ | 10 | 62 | 636 |
| 29 | $Er_2O_3$ | 200 | - | - | - | - | 45 | 636 |
| 30 | $Er_2O_3$ | 70 | - | - | $ErMgSi_2O_5N$ | 2 | 46 | 638 |
| 31 | $Y_2O_3$ | 145 | $MgY_4Si_3O_{13}$ | 4 | $YMgSi_2O_5N$ | 3 | 63 | 720 |
| 32 | $Yb_2O_3$ | 145 | $MgYb_4Si_3O_{13}$ | 4 | $YbMgSi_2O_5N$ | 3 | 64 | 700 |
| 33 | $Er_2O_3$ | 145 | $MgEr_4Si_3O_{13}$ | 4 | $ErMgSi_2O_5N$ | 3 | 64 | 700 |

* A is the ratio $(I_1/I_0)$ x 100, and B is the ratio $(I_2/I_0)$ x 100.

As illustrated in Table 1, Samples No. 2 to 8, 12 to 18, 22 to 28 and 31 to 33 include the silicon nitride crystal, the $MGRE_4Si_3O_{13}$ crystal, and the $REMgSi_2O_5N$ crystal, and thus, it is found out that Samples No. 2 to 8, 12 to 18, 22 to 28 and 31 to 33 have the higher thermal conductivity in comparison with Samples No. 1, 11, and 21 including only the $MgRE_4Si_3O_{13}$ crystal, Samples No. 10, 20, and 30 including only the $REMgSi_2O_5N$ crystal, and Samples No. 9, 19 and 29 not including both of the $REMgSi_2O_5N$ crystal and the $REMgSi_2O_5N$ crystal.

Moreover, the ratio ($I_1/I_0$ x 100) is 2% or more and 9% or less, and thereby, it is found out that Samples No. 2 to 7, 12 to 17 and 22 to 27 are the silicon nitride sintered compacts having high thermal conductivity and high mechanical properties. Still more, the ratio ($I_1/I_0$ x 100) is 4% or more and 8% or less, and thereby, it is found out that the silicon nitride sintered compacts have the higher mechanical properties.

Additionally, in Samples No. 31 to 33, the values of the thermal conductivity and the four-point bending strength become large in comparison with Samples No. 4, 14 and 24, and it is found out that thermal conductivity and mechanical properties can be high by the HIP treatment.

EXAMPLE 2

Samples No. 34 to 43 are manufactured by the same method as the method for manufacturing Sample No. 4 of Example 1, except that a powder of ferric oxide of which the specific surface area is a value illustrated in Table 2, is weighed so as to be 1.4 mass parts to total 100 mass parts of the starting materials, and is added to the slurry.

Each sample is measured by the XRD, and as a result, it is confirmed that a iron silicide ($FeSi_2$) crystal which is the first compound including iron and silicon, is present in all of the samples. Moreover, in the same manner as Example 1, the ratio ($I_1/I_0$ x 100) and the ratio ($I_2/I_0$ x 100) of Samples No. 34 to 43 are confirmed, and as a result, the ratio ($I_1/I_0$ x 100) is 4%, and the ratio ($I_2/I_0$ x 100) is 3%.

Additionally, by the confirmation of the mapping using the EPMA, it is confirmed that the locations where the position of Fe and the position of Si are overlapped, are plurally present, and the iron silicides are dotted.

Furthermore, using the SEM with the magnification of 1000 times, for example, the range is set so that the area is $10.8 \times 10^4$ $\mu m^2$ (the length in the lateral direction is 127 $\mu m$, and the length in the longitudinal direction is 85.3 $\mu m$). The reflected electron image of the range is captured by the CCD camera, and using the image analysis soft "Azokun" (registered trademark, manufactured by Asahi Kasei Engineering Corp.), the number of the iron silicides of which the equivalent circle diameters are 0.05 $\mu m$ or more and 5 $\mu m$ or less in the surface layer, is analyzed by the particle analysis, and the number per 1 $mm^2$ is calculated, and is illustrated in Table 2. Here, as a setting condition of the method, the lightness is set to be bright, the binarization method is set to be manual, and the threshold which is the index indicating light and shade of the reflected electron image, is set to be 1.6 times of the peak value of the histogram indicating the brightness at each point (each pixel) within the reflected electron image.

Next, a heat shock test of the sample is performed. Specifically, the test specimen of which a thickness is 3 mm, a width is 4mm, and the length is 40 mm, is cut from each sample, and the test specimen is heated till the test specimen is at 800°C, and thereafter, the test specimen is placed in the water of 20°C, and the presence or absence of the crack is visually observed in the surface layer of the test specimen after the placing. Moreover, the test specimen of the same size is cut, and the same test is performed at a heating temperature of 900°C. A result thereof is illustrated in Table 2.

Next, an oxidation test of the sample is performed. Specifically, the temperature is retained for 200 hours to be 900°C in the atmosphere, and thus, after cooling, the surface layer is visually observed. In Table 2, a term of red color is written in the sample of which the surface layer is discolored into red, and the sample where the discoloration is not confirmed in the surface layer, is illustrated by a straight line.

[Table 2]

| Sample No. | Specific surface area of powder of ferric oxide ($m^2/g$) | Number of iron silicide (Number/$mm^2$) | Heat shock-resisting temperature | | Surface layer |
|---|---|---|---|---|---|
| | | | 800°C | 900°C | |
| 34 | 0.4 | $1.0\times10^4$ | Presence | Presence | - |
| 35 | 0.5 | $2.0\times10^4$ | Absence | Presence | - |
| 36 | 5 | $3.1\times10^4$ | Absence | Presence | - |
| 37 | 10 | $4.1\times10^4$ | Absence | Presence | - |
| 38 | 20 | $5.1\times10^4$ | Absence | Absence | - |
| 39 | 30 | $6.2\times10^4$ | Absence | Absence | - |

(continued)

| Sample No. | Specific surface area of powder of ferric oxide (m$^2$/g) | Number of iron silicide (Number/mm$^2$) | Heat shock-resisting temperature | | Surface layer |
|---|---|---|---|---|---|
| | | | 800°C | 900°C | |
| 40 | 35 | $1.3 \times 10^5$ | Absence | Absence | - |
| 41 | 45 | $1.7 \times 10^5$ | Absence | Absence | - |
| 42 | 50 | $2.0 \times 10^5$ | Absence | Absence | - |
| 43 | 53 | $2.2 \times 10^5$ | Absence | Absence | Red Color |

As illustrated in Table 2, in the surface layers of Samples No. 35 to 42, the first compounds including iron and silicon are dotted, and the number of the compounds of which the equivalent circle diameters are 0.05 μm or more and 5 μm or less, is 2.0 x 10$^4$ or more and 2.0 x 10$^5$ or less per 1 mm$^2$, and thereby, the crack is not generated in a heat shock-resisting test at 800°C, and it is found out that Samples No. 35 to 42 are good in the heat shock resistance. Moreover, from the result of the oxidation test, the discoloration is not confirmed in Samples No. 35 to 42, and it is found out that Samples No. 35 to 42 are the silicon nitride sintered compacts which can control the discoloration, and are good in body heat impulsivity.

Additionally, the number per 1 mm$^2$ is 5.1 x 10$^4$ or more, and thereby, it is found out that the heat shock resistance can be further enhanced.

EXAMPLE 3

Samples No. 44 to 52 are manufactured by the same method as the method for manufacturing Sample No. 4 of Example 1, except that a powder of tungsten oxide of which the specific surface area is a value illustrated in Table 3, is weighed so as to be 0.8 mass part to total 100 mass parts of the starting materials, and is added to the slurry.

Each sample is measured by the XRD, and as a result, it is confirmed that a tungsten silicide ($W_5Si_3$) crystal which is the second compound including tungsten and silicon, is present in all of the samples. Moreover, in the same manner as Example 1, the ratio ($I_1/I_0$ x 100) and the ratio ($I_2/I_0$ x 100) of Samples No. 34 to 43 are confirmed, and as a result, the ratio ($I_1/I_0$ x 100) is 4%, and the ratio ($I_2/I_0$ x 100) is 3%.

Further, by the confirmation of the mapping using the EPMA, it is confirmed that the locations where the presence position of W and the presence position of Si are overlapped, are plurally present, and the tungsten silicides are dotted.

Furthermore, the number per 1 mm$^2$ of the second compounds of which the equivalent circle diameters are 0.05 μm or more and 5 μm or less in the surface layer, is calculated by the same method as Example 2. However, only the peak value of the histogram is set to be 1.7 times. The result is illustrated in Table 3.

Moreover, 10 test specimens are cut from each sample in conformity to JIS R 1601-2008, and the four-point bending strength is measured at the room temperature, and the average of the measured values is illustrated in Table 3. Still more, using a color difference meter (manufactured by Konica Minolta Holdings, Inc., CM-3700A), a light source is set to be a CIE standard light source D65, a viewing angle is set to be 10°, and a measurement range is set to be 3 mm x 5 mm. In conformity to JIS Z 8722-2000, the color tone of the surface of each sample is measured, and the measured values of a lightness index L*, and chromaticness indexes a* and b* are illustrated in Table 3.

[Table 3]

| Sample No. | Specific surface area of powder of tungsten oxide (m$^2$/g) | Number of tungsten silicide (Number/mm$^2$) | Four-point bending strength (MPa) | Lightness index | Chromaticness index | |
|---|---|---|---|---|---|---|
| | | | | L* | a* | b* |
| 44 | 0.4 | $1.0 \times 10^4$ | 709 | 35.7 | 0.04 | -0.51 |
| 45 | 0.5 | $2.0 \times 10^4$ | 706 | 35.6 | 0.1 | -0.67 |
| 46 | 5 | $3.3 \times 10^4$ | 703 | 35.5 | 0.08 | -0.66 |
| 47 | 15 | $6.3 \times 10^4$ | 700 | 35.4 | 0.05 | -0.48 |
| 48 | 25 | $8.5 \times 10^4$ | 698 | 35.3 | 0.01 | -0.3 |
| 49 | 35 | $1.2 \times 10^5$ | 696 | 35.3 | 0.07 | -0.51 |

(continued)

| Sample No. | Specific surface area of powder of tungsten oxide (m²/g) | Number of tungsten silicide (Number/mm²) | Four-point bending strength (MPa) | Lightness index | Chromaticness index | |
|---|---|---|---|---|---|---|
| | | | | L* | a* | b* |
| 50 | 40 | $1.6 \times 10^5$ | 695 | 35.2 | 0.09 | -0.56 |
| 51 | 50 | $2.0 \times 10^5$ | 693 | 35 | 0.06 | -0.51 |
| 52 | 53 | $2.2 \times 10^5$ | 690 | 34.8 | 0.1 | -0.7 |

As illustrated in Table 3, in the surface layers of Samples No. 45 to 51, the second compounds including tungsten and silicon are dotted, and the number of the second compounds of which the equivalent circle diameters are 0.05 $\mu$m or more and 5 $\mu$m or less, is 2.0 x 10⁴ or more and 2.0 x 10⁵ or less per 1 mm², and thereby, the value of the lightness index L* becomes small, and thus, the surface of the silicon nitride sintered compact exhibits the color of the low lightness. Therefore, the color unevenness is unlikely to be generated, the value of the four-point bending strength becomes large, and the silicon nitride sintered compact is good in the mechanical properties, and thus, it is found out that the crack occurrence can be suppressed even when the mechanical stress is given.

Reference Signs List

1    HEATER
2    PROTECTIVE TUBE
3    POWER SUPPLY
4    HEATING DEVICE
5    ADSORPTION HOLE
6    ADSORPTION MEMBER
7    STEP DIFFERENCE
8    SUPPORT MEMBER
9    THROUGH HOLE
10   ADSORPTION DEVICE

**Claims**

1.  A silicon nitride sintered compact comprising:

    a silicon nitride crystal;
    an $MgRE_4Si_3O_{13}$ crystal (RE is a rare earth element) ; and
    an $REMgSi_2O_5N$ crystal.

2.  The silicon nitride sintered compact according to Claim 1,
    wherein the content of the silicon nitride is 80 mass% or more;
    and wherein a ratio ($I_1/I_0$ x 100) of a peak intensity $I_1$ of the $MgRE_4Si_3O_{13}$ crystal at a diffraction angle of 31° to 34°, to a peak intensity $I_0$ of the silicon nitride crystal at the diffraction angle of 27° to 28° which is calculated by an X-ray diffraction method, is 2% or more and 9% or less.

3.  The silicon nitride sintered compact according to Claim 1 or 2,
    wherein in a surface layer, first compounds including iron and silicon are dotted, and the number of the first compounds of which equivalent circle diameters are 0.05 $\mu$m or more and 5 $\mu$m or less, is 2.0 x 10⁴ or more and 2.0 x 10⁵ or less per 1 mm².

4.  The silicon nitride sintered compact according to any one of Claims 1 to 3,
    wherein in a surface layer, second compounds including tungsten and silicon are dotted, and the number of the second compounds of which equivalent circle diameters are 0.05 $\mu$m or more and 5 $\mu$m or less, is 2.0 x 10⁴ or more and 2.0 x 10⁵ or less per 1 mm².

**5.** A heating device (4) comprising:

a heater (1); and
a protective tube (2) in which the heater (1) is placed and protected,
wherein the protective tube (2) is made up of the silicon nitride sintered compact according to any one of Claims 1 to 4.

**6.** An adsorption device (10) comprising:

an adsorption member (6) that includes an adsorption hole; and
a support member (8) that supports the adsorption member (6),
wherein the adsorption member (6) is made up of the silicon nitride sintered compact according to any one of Claims 1 to 4.

**Patentansprüche**

**1.** Ein Siliciumnitrid-Sinterkörper, aufweisend:

einen Siliciumnitrid-Kristall,
einen $MgRE_4Si_3O_{13}$-Kristall (wobei RE ein Seltenerdelement ist) und
einen $REMgSi_2O_5N$-Kristall.

**2.** Der Siliciumnitrid-Sinterkörper gemäß Anspruch 1,
wobei der Gehalt an Siliciumnitrid 80 Masse-% oder mehr beträgt,
und wobei ein Verhältnis ($I_1/I_0$ x 100) einer Peak-Intensität $I_1$ des $MgRE_4Si_3O_{13}$-Kristalls bei einem Beugungswinkel von 31° bis 34° zu einer Peak-Intensität $I_0$ des Siliciumnitrid-Kristalls bei dem Beugungswinkel von 27° bis 28°, das mittels eines Röntgenbeugungsverfahrens berechnet wird, 2% oder mehr und 9% oder weniger beträgt.

**3.** Der Siliciumnitrid-Sinterkörper gemäß Anspruch 1 oder 2,
wobei in einer Oberflächenschicht erste Verbindungen, die Eisen und Silicium enthalten, gepunktet / verstreut sind, und die Anzahl der ersten Verbindungen, von denen äquivalente Kreisdurchmesser 0,05 $\mu$m oder mehr und 5 $\mu$m oder weniger betragen, 2,0 x $10^4$ oder mehr und 2,0 x $10^5$ oder weniger pro 1 $mm^2$ beträgt.

**4.** Der Siliciumnitrid-Sinterkörper gemäß irgendeinem der Ansprüche 1 bis 3,
wobei in einer Oberflächenschicht zweite Verbindungen, die Wolfram und Silicium enthalten, gepunktet / verstreut sind, und die Anzahl der zweiten Verbindungen, von denen äquivalente Kreisdurchmesser 0,05 $\mu$m oder mehr und 5 $\mu$m oder weniger betragen, 2,0 x $10^4$ und 2,0 x $10^5$ oder weniger pro 1 $mm^2$ beträgt.

**5.** Eine Heizvorrichtung (4), aufweisend:

ein Heizer (1) und
ein Schutzrohr (2), in welchem der Heizer (1) angeordnet und geschützt ist,
wobei das Schutzrohr (2) aus dem Siliciumnitrid-Sinterkörper gemäß irgendeinem der Ansprüche 1 bis 4 hergestellt ist.

**6.** Eine Adsorptionsvorrichtung (10), aufweisend:

ein Adsorptionselement (6), das ein Adsorptionsloch enthält, und
ein Stützelement (8), das das Adsorptionselement (6) abstützt,
wobei das Adsorptionselement (6) aus dem Siliciumnitrid-Sinterkörper gemäß irgendeinem der Ansprüche 1 bis 4 hergestellt ist.

**Revendications**

**1.** Un corps fritté en nitrure de silicium, comportant :

un cristal de nitrure de silicium ;
un cristal de $MgRE_4Si_3O_{13}$ (où RE est un élément de terres rares) ; et
un cristal de $REMgSi_2O_5N$.

2. Le corps fritté en nitrure de silicium selon la revendication 1,
dans lequel la teneur en nitrure de silicium est de 80 % en masse ou plus ;
et dans lequel un rapport ($I_1/I_0$ x 100) d'une intensité de pic $I_1$ du cristal de $MgRE_4Si_3O_{13}$ à un angle de diffraction de 31° à 34° à une intensité de pic $I_0$ du cristal de nitrure de silicium à l'angle de diffraction de 27° à 28°, calculé par un procédé de diffraction des rayons X, est de 2% ou plus et de 9% ou moins..

3. Le corps fritté en nitrure de silicium selon la revendication 1 ou 2,
dans lequel, dans une couche de surface, des premiers composés comprenant du fer et du silicium sont pointés / dispersés, et le nombre des premiers composés dont les diamètres circulaires équivalents sont de 0,05 $\mu$m ou plus et de 5 $\mu$m ou moins, est de 2,0 x $10^4$ ou plus et de 2,0 x $10^5$ ou moins par $mm^2$.

4. Le corps fritté en nitrure de silicium selon l'une quelconque des revendications 1 à 3,
dans lequel, dans une couche de surface, des deuxièmes composés comprenant du tungstène et du silicium sont pointés / dispersés, et le nombre des deuxièmes composés dont les diamètres circulaires équivalents sont de 0,05 $\mu$m ou plus et de 5 $\mu$m ou moins, est de 2,0 x $10^4$ ou plus et de 2,0 x $10^5$ ou moins par $mm^2$.

5. Un dispositif de chauffage (4), comportant :

un chauffage (1) ; et
un tube de protection (2) dans lequel le chauffage (1) est disposé et protégé,
dans lequel le tube de protection (2) est composé du corps fritté en nitrure de silicium selon l'une quelconque des revendications 1 à 4.

6. Un dispositif d'adsorption (10), comportant :

un élément d'adsorption (6) comprenant un orifice d'adsorption ; et
un élément d'appui (8) qui appuie l'élément d'adsorption (6),
dans lequel l'élément d'adsorption (6) est composé du corps fritté en nitrure de silicium selon l'une quelconque des revendications 1 à 4.

Fig. 1

Fig. 2

(a)

10

6a(6)

5

A

A

8

(b)

7    6a    6    5    9    8

**EP 2 902 378 B1**

**REFERENCES CITED IN THE DESCRIPTION**

**Patent documents cited in the description**

- CN 101100388
- WO 2008114752 A
- JP 28552682 B
- JP 2012106920 A
- WO 2011111746 A